# EUROPEAN PATENT SPECIFICATION

(11) **EP 0 546 686 B1**
(45) Date of publication and mention of the grant of the patent: **26.02.1997**
(21) Application number: 92310259.4
(22) Date of filing: 10.11.1992
(51) Int. Cl.: C10G 47/02

(54) **Hydroconversion process**
Kohlenwasserstoffumwandlungsverfahren
Procédé d'hydroconvertion

(30) Priority: 22.11.1991 US 798300
(43) Date of publication of application: 16.06.1993
(73) Proprietor: TEXACO DEVELOPMENT CORPORATION, White Plains, New York 10650 (US)
(72) Inventor: Porter, Michael Kevin, Beaumont, TX 77706 (US); Clausen, Glen Allen, 225 Nederland, TX 77627 (US); Harrison, Jeffrey Baker, Fishkill, New York 12524 (US); Bhattacharya, Ajit Kumar, Hopewell Junction, New York 12533 (US)
(74) Representative: Green, Mark Charles

(56) References cited:
- EP-A- 0 064 429
- EP-A- 0 512 778
- DE-A- 3 237 037

## Description

This invention relates to the hydroconversion of heavy hydrocarbon oils. More particularly it relates to a hydrotreating catalyst system which permits operation to be carried out with decreased power consumption and better ebullation in the reactor bed.

As is well known to those skilled in the art, the petroleum refiner wishes to convert high boiling fractions such as vacuum resid to lower boiling fractions which are of higher value and more readily handleable and/or marketable. Illustrative of the large body of prior art patents directed to this problem are the following:

US-A-4,579,646 discloses a bottoms visbreaking hydroconversion process wherein hydrocarbon charge is partially coked, and the coke is contacted within the charge stock with an oil-soluble metal compound of a metal of Group IV-B, V-B, VII-B, or VIII to yield a hydroconversion catalyst.

US-A-4,724,069 discloses hydrofining in the presence of a supported catalyst bearing a VI-B, VII-B, or VIII metal on alumina, silica, or silica-alumina. There is introduced with the charge oil, as additive, a naphthenate of Co or Fe.

US-A-4,567,156 discloses hydroconversion in the presence of a chromium catalyst prepared by adding a watersoluble aliphatic polyhydroxy compound (such as glycerol) to an aqueous solution of chromic acid, adding a hydrocarbon thereto, and heating the mixture in the presence of hydrogen sulfide to yield a slurry.

US-A-4,564,441 discloses hydrofining in the presence of a decomposable compound of a metal (Cu, Zn, III-B, IV-B, VI-B, VII-B, or VIII) mixed with a hydrocarbon-containing feed stream; and the mixture is then contacted with a "suitable refractory inorganic material" such as alumina.

US-A-4,557,823 discloses hydrofining in the presence of a decomposable compound of a IV-B metal and a supported catalyst containing a metal of VI-B, VII-B, or VIII.

US-A-4,557,824 discloses demetallization in the presence of a decomposable compound of a VI-B, VII-B, or VIII metal admitted with the charge and a heterogeneous catalyst containing a phosphate of Zr, Co, or Fe.

US-A-4,551,230 discloses demetallization in the presence of a decomposable compound of a IV-B, V-B, VI-B, VII-B, or VIII metal admitted with the charge and a heterogeneous catalyst containing NiAsₓ on alumina.

US-A-4,430,207 discloses demetallization in the presence of a decomposable compound of a V-B, VI-B, VII-B, or VIII metal admitted with the charge and a heterogeneous catalyst containing a phosphate of Zr or Cr.

US-A-4,389,301 discloses hydroprocessing in the presence of added dispersed hydrogenation catalyst (typically ammonium molybdate) and added porous contact particles (typically FCC catalyst fines, alumina, or naturally occurring clay).

US-A-4,352,729 discloses hydrotreating in the presence of a molybdenum blue solution in polar organic solvent introduced with the hydrocarbon charge.

US-A-4,338,183 discloses liquefaction of coal in the presence of unsupported finely divided metal catalyst.

US-A-4,298,454 discloses hydroconversion of a coal-oil mixture in the presence of a thermally decomposable compound of a IV-B, V-B, VI-B VII-B, or VIII metal, preferably Mo.

US-A-4,134,825 discloses hydroconversion of heavy hydrocarbons in the presence of an oil-soluble compound of IV-B, V-B, VI-B, VII-B, or VIII metal added to charge, the compound being converted to solid, non-colloidal form by heating in the presence of hydrogen.

US-A-4,125,455 discloses hydrotreating in the presence of a fatty acid salt of a VI-B metal, typically molybdenum octoate.

US-A-4,077,867 discloses hydroconversion of coal in the presence of oil-soluble compound of V-B, VI-B, VII-B, or VIII metal plus hydrogen donor solvent.

US-A-4,067,799 discloses hydroconversion in the presence of a metal phthalocyanine plus dispersed iron particles.

US-A-4,066,530 discloses hydroconversion in the presence of (i) an iron component and (ii) a catalytically active other metal component prepared by dissolving an oil-soluble metal compound in the oil and converting the metal compound in the oil to the corresponding catalytically active metal component.

EP-A-512778 teaches that under the conditions of operation therein set forth (note e.g. Examples II-V* and related Table II in particular), it is possible to attain improvements (in e.g. conversion and other factors) by addition to the heterogeneous catalyst of an oil-soluble catalyst (as metal) in amount of 10-200 wppm. In particular, Example I shows that it is possible to attain much higher conversion when using 160 wppm of molybdenum additive.

It is an object of this invention to provide a novel process for hydroconversion particularly characterized by decreased power consumption and better ebullation properties. Other objects will be apparent to those skilled in the art.

The present invention provides a method of catalytically hydroconverting a charge hydrocarbon oil containing 50-98 weight percent of components boiling above 538°C (1000°F) in an ebullated bed to convert 30-90 weight percent thereof to product containing components boiling below 538°C (1000°F), which comprises
passing said charge hydrocarbon oil containing 50-98 weight percent of components boiling above 538°C (1000°F) into contact in a conversion zone with (i) a solid heterogenous catalyst containing, as a hydrotreating component, a metal of Group IV-B, V-B, VI-B, VII-B or VIII on a support and (ii) as an oil-miscible catalyst, a compound of a metal of Group IV-B, V-B, VI-B, VII-B or VIII, said oil-miscible catalyst being present in amount sufficient to provide metal in amount of less than 60 wppm, based on charge hydrocarbon oil;
maintaining said charge hydrocarbon oil in said conversion zone at conversion conditions in the presence of hydrogen and mercaptan until from 30-90 weight percent of said components boiling above 538°C (1000°F) is converted to components boiling below 538°C (1000°F); and
recovering said product.

The charge which may be treated by the process of this invention may include high boiling hydrocarbons typically those having an initial boiling point (ibp) above 343°C 650°F. This process is particularly useful to treat charge hydrocarbons containing a substantial quantity of components boiling above 538°C (1000°F) to convert a substantial portion thereof to components boiling below 538°C (1000°F).

Typical of these streams are heavy crude oil, topped crude, atmospheric resid, vacuum resid, asphaltenes, tars, coal liquids, visbreaker bottoms, etc. Illustrative of such charge streams may be a vacuum resid obtained by blending vacuum resid fractions from Alaska North Slope Crude (59v%), Arabian Medium Crude (5v%), Arabian Heavy Crude (27%), and Bonny Light Crude (9v%) having the characteristics listed in Table I:

**TABLE I**

| PROPERTY | Charge |
|---|---|
| API Gravity | 5.8 |
| | |
| 538°C (1000°F) + (W%) | 93.1 |
| Composition (W%) | |
| C | 84.8 |
| | |
| H | 10.09 |
| | |
| N | 0.52 |
| | |
| S | 3.64 |
| | |
| Alcor Microcarbon Residue (McR) (%) | 19.86 |
| | |
| n-C₇ insolubles (%) | 11.97 |
| Metals content (wppm) | |
| Ni | 52 |
| V | 131 |
| Fe | 9 |
| Cr | 0.7 |
| Na | 5. |

It is a feature of these charge hydrocarbons that they contain undesirable components typified by nitrogen (in amount up to 1w%, typically 0.2-0.8w%, say about 0.52w%), sulfur (in amount up to 10w%, typically 2-6w%, say about 3.64w%), and metals including Ni, V, Fe, Cr, Na, etc. in amounts up to 900 wppm, typically 40-400 wppm, say 198 wppm). The undesirable asphaltene content of the charge hydrocarbon may be as high as 22w%, typically 8-16w%, say 11.97w% (analyzed as components insoluble in normal heptane).

The API gravity of the charge may be as low as minus 5, typically minus 5 to plus 35, say about 5.8. The content of components boiling above 538°C (1000°F) is 50-98+w%, say 93.1w%. The Alcor MCR Carbon content may be as high as 30w%, typically 15-25w%, say 19.86w%.

In practice of the method of this invention, the charge hydrocarbon oil may be passed to a hydroconversion operation wherein conversion occurs in liquid phase at conversion conditions including 371°C-454°C (700°F-850°F), preferably 399°C-432°C (750°F-810°F), say 426°C (800°F) at hydrogen partial pressure of 500-5000 psig, preferably 10.4-17.3 MPa (1500-2500 psig), say 13.9 MPa (2000 psig).

It is a feature of the method of this invention that there is added to the charge hydrocarbon oil (preferably prior to admission to hydroconversion) a catalytically effective amount of an oil-miscible, preferably an oil-soluble, catalyst compound of a metal of Group IV-B, V-B, VI-B, VII-B or VIII of the Periodic Table.

When the metal is a Group IV-B metal, it may be titanium (Ti), zirconium (Zr), or hafnium (Hf).

When the metal is a Group V-B metal, it may be vanadium (V), niobium (Nb), or tantalum (Ta).

When the metal is a Group VI-B metal, it may be chromium (Cr), molybdenum (Mo), or tungsten (W).

When the metal is a Group VII-B metal, it may be manganese (Mn) or rhenium (Re).

When the metal is a Group VIII metal, it may be a non-noble metal such as iron (Fe), cobalt (Co), or nickel (Ni) or a noble metal such as ruthenium (Ru), rhodium (Rh), palladium (Pd), osmium (Os), iridium (Ir), or platinum (Pt).

Preferably the metal is a Group VI-B metal - most preferably molybdenum (Mo).

The compound of the metal is an oil-miscible or oil-soluble compound typified by:

(i) metal salts of aliphatic carboxylic acids
   molybdenum stearate
   molybdenum palmitate
   molybdenum myristate
   molybdenum octoate
(ii) metal salts of naphthenic carboxylic acids
   cobalt naphthenate
   iron naphthenate
   molybdenum naphthenate
(iii) metal salts of alicyclic carboxylic acids
   molybdenum cyclohexane carboxylate
(iv) metal salts of aromatic carboxylic acids
   cobalt benzoate
   cobalt o-methyl benzoate
   cobalt m-methyl benzoate
   cobalt phthallate
   molybdenum p-methy benzoate
(v) metal salts of sulfonic acids
   molybdenum benzene sulfonate
   cobalt p-toluene sulfonate
   iron xylene sulfonate
(vi) metal salts of sulfinic acids
   molybdenum benzene sulfinate
   iron benzene sulfinate
(vii) metal salts of phosphoric acids
   molybdenum phenyl phosphate
(viii) metal salts of mercaptans
   iron octyl mercaptide
   cobalt hexyl mercaptide
(ix) metal salts of phenols
   cobalt phenolate
   iron phenolate
(x) metal salts of polyhydroxy aromatic compounds
   iron catecholate
   molybdenum resorcinate
(xi) organo metallic compounds
   molybdenum hexacarbonyl
   iron hexacarbonyl
   cyclopentadienyl molybdenum tricarbonyl
(xii) metal chelates
   ethylene diamine tetra carboxylic acid-diferous salt
(xiii) metal salts of organic amines
   cobalt salt of pyrrole

The preferred compounds may be cobalt naphthenate, molybdenum hexacarbonyl, molybdenum naphthenate, molybdenum octoate, and molybdenum hexanoate.

It is found that the impact of the oil-soluble compound may be augmented by use of compounds of more than one metal. For example if molybdenum (e.g. as the naphthenate) is employed, it is found desirable to add an additional quantity of cobalt (e.g. as the naphthenate). This yields a positive synergistic promotional effect on catalytic desulfurization and demetallization. Typically cobalt may be added in amount of 0.2-2 moles, say 0.4 moles per mole of molybdenum.

The metal compounds to be employed are oil-miscible and preferably oil-soluble i.e. they are soluble in the charge hydrocarbon oil in amount of at least 0.01g/100g typically 0.025-0.25g/100g, say 0.1g/100g or alternatively they are readily dispersable in the charge hydrocarbon oil in amount of at least those amounts. It is also a feature of these metal compounds that, when activated as hereinafter set forth, the activated compounds are also oil-miscible in the hydrocarbon oils with which they come into contact during practice of the method of this invention.

It is a feature of the process of this invention that if the oil-miscible compound is present in amount less than 60 wppm (i.e. of metal) say 10-60 wppm based on hydrocarbon oil to be hydroconverted, unexpected results may be achieved. It is unexpectedly found, if the noted amount is 15-60, preferably 30-60, most preferably 45 wppm, that the power consumption in the ebullated bed process is decreased. Specifically the total power (i.e. thermal energy) required to maintain the reaction temperature at set point in the ebullated bed, may be decreased from 8000 MJ/m³ (1200 KBTU/BBL) per hour (which is the power consumption at 0 ppm metal) down to a minimum of 6600 MJ/m³ (1000 KBTU/BBL) per hour. This is an improvement of 24% in power saving. This is attained at a conversion of 61.2v% which is 11% greater than the base line conversion of 54.6v%; and it is also noted that the sediment remains about the same.

It is a particular feature of the process of this invention that it is unexpectedly found that the optimum conversion may be achieved if the noted amount of metal is 15-60, preferably 30-60, say 30 wppm.

Conversion is calculated as [the percentage of 538°C (1000°F) + material in the feed minus the percentage of 538°C (1000°F) + material in the Product] divided by the percentage of 538°C (1000°F) + material in the feed.

In addition to these improvements which may be attained in conversion and power consumption, it is particularly significant that improvement in the level of sediment in the product oils is attained. It is unexpectedly found that sediment formation in the effluent from the ebullated bed may be minimized by use of added soluble metal compound in amount sufficient to provide a metal content of 15-30 wppm, preferably about 15 wppm. It is found for example that the sediment in the product oil when 15 wppm of metal is present is only about (0.037/0.092 or) 40% of that observed for the base case.

Sediment in the effluent from the ebullated bed is measured by IP Test 375/86 entitled Total Sediment Residual Fuel Oils.

It will be apparent to those skilled in the art that the level of soluble metal, in the 15-60 wppm range, which will be employed will depend upon the particular charge to the ebullated bed, the power consumed, and the conversion attained. In any instance, an economic study will permit a ready determination of the desired level of soluble metal to be employed. It is to be noted however that in most instances, while the conversion and the power consumption are significant, it is usually found that the sediment levels in the product will be determinative. This is because undesirably high level of sediment will result in plugging of various pieces of equipment with resulting short run times; and this factor may be found to be economically controlling-especially so when the feed is characterized by a high propensity to generate sediment.

For these reasons, it will generally be preferred to operate with a soluble metal feed of 15-30 wppm, say 30 wppm, as this will give good conversion and power consumption at best sediment levels - although 30 wppm gives only slightly more sediment at satisfactory levels of conversion and power consumption as compared to 15 wppm.

It is possible in practice of the process of this invention to introduce the oil-miscible metal compound as a solution/mixture thereof with a highly aromatic heavy oil. The highly aromatic heavy oil which may be employed, typically those oils which contain sulfur such as a heavy cycle gas oil (HCGO), may be characterized as follows:

**TABLE**

| Property | Value | | |
|---|---|---|---|
| | Broad | Narrow | Typical |
| API Gravity | -5 to 20 | 0-10 | 2 |
| Temperature °F/°C | | | |
| ibp | 500-1000/260-538 | 650-850/343-454 | 650/343 |
| | | | |
| 50% | 800-900/426-482 | 825-875/440-468 | 850/454 |
| | | | |
| ep | 1000-1200/538-650 | 1000-1100/538-593 | 1050/565 |
| | | | |
| Aromatics Content w% | 25-90 | 30-85 | 85 |
| Sulfur Content w% | 0.5-5 | 2-4 | 3.5 |

Illustrative highly aromatic heavy oils which may be employed may include:

**TABLE**

| A - Heavy Cycle Gas Oil | Value |
|---|---|
| API Gravity | -3.0 |

| Temp °F/°C | |
|---|---|
| ibp | 435/223 |
| 10% | 632/333 |
| 50% | 762/405 |
| 90% | 902/483 |
| ep | 1056/569 |
| | |
| Aromatics Content w% | 85 |
| Sulfur Content w% | 2.5-3.5 |

| B - MP Extract | |
|---|---|
| API Gravity | 8 |

| Temp °F/°C | |
|---|---|
| ibp | 600/315 |
| ep | 1000/537 |
| | |
| Aromatics Content w% | 50-90 |
| Sulfur Content w% | 3 |

| C - Decant Oil | |
|---|---|
| API Gravity | -2.7 |

| Temp °F/°C | |
|---|---|
| ibp | 525/273 |
| 10% | 708/375 |
| 50% | 935/501 |
| 90% | 975/523 |
| ep | 1100/593 |
| Aromatics Content w% | 80 |
| Sulfur Content w% | 1.75 |

The metal compound may be added in amount to form a solution/mixture with the heavy oil of 0.01w%-0.04w%, preferably 0.01w%-0.03w%, say 0.02w%. The metal compound may be added to the heavy oil and stored and used in the form of the solution/mixture therewith. When this is added to the charge hydrocarbon oil to hydrotreating, the amount added may be 5w%-20w%, preferably 15w%, say 13w% of solution/mixture which will provide the 10-60 wppm of metal desired to effect the results noted supra.

Activation of the oil-miscible compound derived from a metal of Group IV-BV-B, VI-B, VII-B, or VIII in accordance with practice of the process of this invention may be effected either by pre-treatment (prior to hydroconversion) or in situ (during hydroconversion). It is preferred to effect activation in situ in the presence of the hydrogenation catalyst to achieve a highly dispersed catalytic species.

Activation according to the preferred method may be carried out by adding metal compound (in amount to provide desired metal content) to charge hydrocarbon at 15°C-150°C (60°F-300°F), say 93°C (200°F). The mixture is activated by heating to 200°C-446°C (400°F-835°F), typically 260°C-371°C (500°F-700°F), say 315°C (600°F) at partial pressure of hydrogen of 3.5-34.6 MPa (500-5000 psig), typically 6.8-20.6 MPa (1000-3000 psig), say 13.7 Mpa (2000 psig) and at partial pressure of a gaseous mercaptan of 0-3.3 Mpa (5-500 psig), typically 0.1-9 Mpa (10-300 psig), say 0.2 MPa (50 psig). Total pressure may be 3.5-37.8 MPa (500-5500 psig), typically 6.8-22.6 MPa (1000-3300 psig), say 18.1 MPa (2650 psig). Commonly the gas may contain 40-99v%, typically 90-99v%, say 98v% hydrogen and 1-10v%, say 2v% mercaptan such as hydrogen sulfide. Time of activation may be 1-12, typically 2-6, say 3 hrs.

In this embodiment, it will be noted that activation may occur at temperature which is lower than the temperature of conversion.

The mercaptans which may be employed may include hydrogen sulfide, aliphatic mercaptans, typified by methyl mercaptan, lauryl mercaptan, etc. aromatic mercaptans; dimethyl disulfide, carbon disulfide, etc.

These mercaptans apparently decompose during the activation process. It is not clear why this treatment activates the metal compound. It may be possible that the activity is generated as a result of metal sulfides formed during the treatment.

When the sulfur content of the charge hydrocarbon is above about 2w%, it may not be necessary to add a mercaptan during activation i.e. hydrodesulfurization of the charge may provide enough mercaptan to properly activate (i.e. sulfide) the oil-miscible decomposable catalyst.

It is possible to activate the oil-miscible metal compound in the solution/mixture with the heavy aromatic oil. Activation may be effected under the same conditions as are used when activation is carried out in the charge stream), the compatible oil containing the now activated metal may be admitted to the charge stream in amount sufficient to provide therein activated oil-miscible metal compound in desired amount.

In still another embodiment, activation may be carried out by subjecting the charge hydrocarbon oil containing the oil-miscible metal compound to hydroconversion conditions including temperature of 370°C-450°C (700°F-850°F), preferably 398°C-430°C (750°F-810°F), say 426°C (800°F) at hydrogen partial pressure of 3.5-34.3 MPa (500-5000 psig), preferably 10.2-13.6 MPa (1500-2000 psig), say 13.6 MPa (2000 psig) - in the presence of a mercaptan but in the absence of heterogeneous hydroconversion catalyst.

In the preferred embodiment, activation may be carried out during hydroconversion i.e. in the presence of the heterogeneous, hydroconversion catalyst, hydrogen, and mercaptan.

Hydroconversion is carried out in the presence of solid heterogeneous catalyst containing, as a hydrogenating component, a metal of Group IV-B, V-B, VI-B, VII-B, or VIII on a support which may typically contain carbon or an oxide of aluminum, silicon, titanium, magnesium, or zirconium. Preferably the catalyst may contain a metal of Group VI-B and VIII - typically nickel and molybdenum.

When the metal is a Group IV-B metal, it may be titanium (Ti) or zirconium (Zr).

When the metal is a Group V-B metal, it may be vanadium (V), niobium (Nb), or tantalum (Ta).

When the metal is a Group VI-B metal, it maybe chromium (Cr), molybdenum (Mo), or tungsten (W).

When the metal is a Group VII-B metal, it maybe manganese (Mn) or rhenium (Re).

When the metal is a Group VIII metal, it may be a non-noble metal such as iron (Fe), cobalt (Co), or nickel (Ni) or a noble metal such as ruthenium (Ru), rhodium (Rh), palladium (Pd), osmium (Os), iridium (Ir), or platinum (Pt).

The solid heterogeneous catalyst may also contain, as a promoter, a metal of Groups I-A, I-B, II-A, II-B, or V-A.

When the promoter is a metal of Group I-A, it may preferably be sodium (Na) or potassium (K).

When the promoter is a metal of Group IB, it may preferably be copper (Cu).

When the promoter is a metal of Group II-A, it may be beryllium (Be), magnesium (Mg), calcium (Ca), strontium (Sr), barium (Ba), or radium (Ra).

When the promoter is a metal of Group II-B, it may be zinc (Zn), cadmium (Cd), or mercury (Hg).

When the promoter is a metal of Group IV-B, it may be titanium (Ti), zirconium (Zr), or hafnium (Hf);

When the promoter is a metal of Group V-A, it may preferably be arsenic (As), antimony (Sb), or bismuth (Bi).

The hydrogenating metal may be loaded onto the solid heterogeneous catalyst by immersing the catalyst support in solution (e.g. ammonium heptamolybdate) for 2-24 hours, say 24 hours, followed by drying at 15-150°C (60°F-300°F), say 93°C (200°F) for 1-24 hours, say 8 hours and calcining for 1-24 hours, say 3 hours at 398°-594°C (750°F-1100°F), say 498°C (930°F).

The promoter metal may preferably be loaded onto the solid heterogeneous catalyst by immersing the catalyst support (preferably bearing the calcined hydrogenating metal - although they may be added simultaneously or in any order) in solution (e.g. bismuth nitrate) for 2-24 hours, say 24 hours, followed by drying at 15-150°C (60°F-300°F), say 93°C (200°F) for 1-24 hours, say 3 hours, and calcining at 300°-593°C (570°F-1100°F), say 398°C (750°F) for 1-12 hours, say 3 hours.

The solid heterogenous catalyst employed in the method of this invention may be characterized by a Total Pore Volume of 0.2-1.2 cc/g, say 0.77 cc/g; a Surface Area of 50-500 m²/g, say 280 m²/g; and a Pore Size Distribution as follows:

| Pore Diameter Å | Volume cc/g |
|---|---|
| 30-100 | 0.15-0.8, say 0.42 |
| 100-1000 | 0.10-0.50, say 0.19 |
| 1000-10,000 | 0.01-0.40, say 0.16 |

In another embodiment, it may have a pore size distribution as follows:

| Pore Diameter Å | Pore Volume cc/g | Typical |
|---|---|---|
| >250 | 0.12-0.35 | 0.28 |
| >500 | 0.11-0.29 | 0.21 |
| >1500 | 0.08-0.26 | 0.19 |
| | | |
| >4000 | 0.04-0.18 | 0.11 |

The solid heterogeneous catalyst typically may contain 4-30w%, say 9.5w% Mo, 0-6w%, say 3.1w% Ni and 0-6w%, say 3.1w% of promoter metal e.g. bismuth. Liquid hourly space velocity (LHSV) in the hydroconversion reactors may be 0.1-2, say 0.7. Preferably the heterogeneous catalyst may be employed in the form of extrudates of diameter of 0.7-6.5mm, say 1mm and of length of 0.2-25mm, say 5mm.

Although it is possible to carry out hydroconversion in a fixed bed, a moving bed, a fluidized bed, or a well-stirred reactor, it is found that the advantages of this invention may be most apparent when hydroconversion is carried out in an ebullated bed.

It is a feature of the process of this invention that hydroconversion may be carried out in one or more beds. It is found that the active form of the catalyst is formed in or accumulates in the first of several reactors; and accordingly increases in conversion and hetero atom removal activities appear principally to occur in the first of several reactors.

Effluent from hydroconversion is typically characterized by an increase in the content of liquids boiling below 1000°F. Commonly the w% conversion of the 1000°F + boiling material is 30%-90%, say 67% which is typically 5%-25%, say 12% better than is attained by the prior art techniques.

It is a feature of this invention that it permits attainment of improved removal of sulfur (HDS Conversion), of nitrogen (HDN Conversion), and of metals (HDNi and HDV Conversion). Typically HDS Conversion may be 30-90%, say 65% which is 1%-10%, say 4% higher than the control runs. Typically HDN Conversion may be 20%-60%, say 45% which is 1%-10%, say 4% higher than control runs. Typically HDNi plus HDV Conversion may be 70%-99%, say 90% which is 5%-20%, say 13% higher than control runs.

It is however particularly a feature of the process of this invention that it permits attainment of improvements in Conversion and Power Consumption - but more importantly in most instances substantial decrease in the sediment content of the effluent from an ebullated bed.

Practice of the method of this invention will be apparent to those skilled in the art from the following wherein, as elsewhere in this specification unless otherwise stated, all parts are parts by weight. An asterisk designates a control example.

### EXAMPLES 1-13

In these Examples oil-soluble catalyst is molybdenum naphthenate in amount to provide 30 wppm molybdenum in the feed to the unit in Example 1-9: and as noted in the Table below for Examples 10-13.

The feedstock is a blend of (i) vacuum resid, (ii) visbreaker bottoms, (iii) vacuum bottoms recycle (iv) and heavy cycle gas oil having the following properties:

**TABLE**

| Property | Value |
|---|---|
| API Gravity | 4.8 |
| > 1000°F w% (> 598°C w%) | 88 |

| Composition w% Leco | |
|---|---|
| C | 7.5 |
| H | 10.5 |
| N | 0.54 |
| S | 5.0 |
| Alcor Microcarbon Residue (MCR)% | 22.3 |
| n-C₇ insolubles w% | 13.5 |

| Metals Content wwpm | |
|---|---|
| Ni | 41 |
| V | 17 |
| Fe | 15.0 |
| Cr | 0.2 |
| Na | 5.5 |

| Kinematic Visc. Cst (ASTM D-445) | |
|---|---|
| @ 212 °F /100°C | 2368 |
| @ 250 °F/ 120°C | 665 |
| @ 300 °F/ 150°C | 117 |

The mixture of feedstock and heavy cycle gas oil containing the oil-soluble molybdenum naphthenate is admitted at 415°C (780°F) and 17.1 MPa (2500 psig) and 0.39 LHSV. Hydrogen feed is 722 Nm³/m³ (4300 SCFB) of 92% hydrogen.

Supported catalyst in the ebullated bed is cylinders (0.8 mm diameter and 5 mm length) of commercially available catalyst containing 2.83w% nickel and 8.75w% molybdenum on alumina. Surface area is 285.2 m²/g and Total Pore Volume is 0.78 cc/g. Pore Size Distribution is 0.28 cc/g >250A; 0.21 cc/g > 500A; 0.19 cc/g > 1550A; 0.11 cc/g > 4000A.

The catalyst is activated in situ during hydroconversion.

During hydroconversion, the oil-soluble catalyst (in the heavy cycle gas oil) is pulsed in so that the effect of addition may be observed. The duration of each pulse (i.e. the time during which the oil-soluble catalyst is added) is 24 hours during which molybdenum (as molybdenum naphthenate) is added to yield a concentration of 30 ppm of molybdenum based on fresh feed. At the beginning of each pulsed addition, the sediment content (w%) of the product decreases; and over 1-6 days, it rises again during a decay period. A further pulse over 24 hours is admitted and then a similar decay period ensues.

A base line (prior to catalyst addition) analysis of conversion (vol%) and sediment (w%) is taken (Example I*); and similar determinations are made at the end of each pulsed addition and at the end of each decay period of 1-6 days.

In Example 10, the molybdenum (as molybdenum naphthenate) is admitted at a constant rate over 9 days to yield a molybdenum concentration of 15 wppm. Then the concentration of molybdenum is increased to 30 wppm (for Example 11) and maintained at the new increased level for nine additional days. Similar increases are made after subsequent nine day periods (for Examples 12 and 13) to attain the desired level of molybdenum. During each nine day run, conversion, sediment, and power consumption are measured.

**TABLE**

| Example | Conversion | | | Sediment |
|---|---|---|---|---|
| Pulsed Additions | Avg | Max | Max Delta | |
| 1 | 54.6 | | | 0.0923 |
| 2 | 56.5 | 59.9 | 5.3 | |
| 3 | 57.8 | | | |
| 4 | 59.2 | 60.1 | 5.5 | 0.0326 |
| 5 | 54.3 | | | |
| 6 | 58.1 | 58.8 | 4.2 | 0.0342 |
| 7 | 54.4 | | | |
| 8 | 56.9 | 59.7 | 5.1 | 0.0430 |
| 9 | 55.2 | | | |

**TABLE**

| Example | Wppm additive | Conversion | | | Sediment | Power Con | |
|---|---|---|---|---|---|---|---|
| | | Avg | Max | Max Delta | | MJ/m³ (KBTU/BBL) | A |
| 1 | 0 | 54.6 | | | 0.0923 | 8000 (1200) | 100 |
| | | | | | | | |
| 10 | 15 | 54.9 | 56.5 | 1.9 | 0.0356 | 7160 (1079) | 90 |
| | | | | | | | |
| 11 | 30 | 57.1 | 60.1 | 5.5 | 0.0481 | 6950 (1047) | 88 |
| | | | | | | | |
| 12 | 45 | 60.8 | 61.2 | 6.2 | 0.0944 | 6675 (1006) | 84 |
| | | | | | | | |
| 13 | 60 | 61.5 | 61.9 | 6.9 | 0.0800 | 6802 (1025) | 86 |
| A = % Baseline Power Con. | | | | | | | |

From the above Table, it is apparent that attainment of minimum sediment in the product is unexpectedly attained at about 15 wppm of added oil-soluble catalyst; and this is attained at a Conversion (54.9v% in Example 10) which is better than the base line conversion (54.6v%) attained with no addition of oil-soluble catalyst in Example I.

It is also apparent that Maximum Conversion (61.9v% in Example 13) is attained at about 60 wppm of added oil-soluble catalyst; and this is attained at a sediment level (0.0800w%) which represents an improvement over the Base line of Example 1 ( of 0.0923).

Furthermore it will be noted that minimum power consumption of 6675 MJ/m³ (1006 KBTU/BBL), attained at 45 wppm of oil-soluble catalyst in Example 12, is only 84% of the power consumption of Example 9 of 8000 MJ/m³ (1196 KBTU/BBL).

In summary, it is possible to obtain improvement in operation (to improve those factors of interest in a particular case) by use of specific quantities of additive oil-soluble catalyst. If one wishes to operate in manner to yield minimum sediment, as is the most typical situation, then it appears that it would be desirable use ca 15 wppm of additive metal in the best mode to attain this objective. Attainment of maximum level of conversion appears to occur at about 60 wppm metal in the best mode to attain this objective; and attainment of minimum level of Power Consumption appears to occur at about 45 wppm in the best mode to attain this objective. In each instance an economic balance will readily determine the most desirable point at which to operate within the ≤ 60 ppm metal range in order to attain the most efficient operation.

Although this invention has been illustrated by reference to specific embodiments, it will be apparent to those skilled in the art that various charges and modifications may be made which clearly fall within the scope of the appended claims.

## Claims

1. A method of catalytically hydroconverting a charge hydrocarbon oil containing 50-98 weight percent of components boiling above 538°C (1000°F) in an ebullated bed to convert 30-90 weight percent thereof to product containing components boiling below 538°C (1000°F), which comprises
passing said charge hydrocarbon oil containing 50-98 weight percent of components boiling above 538°C (1000°F) into contact in a conversion zone with (i) a solid heterogenous catalyst containing, as a hydrotreating component, a metal of Group IV-B, V-B, VI-B, VII-B or VIII on a support and (ii) as an oil-miscible catalyst, a compound of a metal of Group IV-B, V-B, VI-B, VII-B or VIII, said oil-miscible catalyst being present in amount sufficient to provide metal in amount of less than 60 wppm, based on charge hydrocarbon oil;
maintaining said charge hydrocarbon oil in said conversion zone at conversion conditions in the presence of hydrogen and mercaptan until from 30-90 weight percent of said components boiling above 538°C (1000°F) is converted to components boiling below 538°C (1000°F); and
recovering said product.

2. A method as claimed in Claim 1, wherein oil-miscible catalyst is soluble in charge hydrocarbon in amount of at least 0.01g/100g.

3. A method as claimed in any preceding Claim, wherein oil-miscible catalyst is present in amount sufficient to provide metal in amount of 15-60 wppm.

4. A method as claimed in any preceding Claim, wherein oil-miscible catalyst is present in amount sufficient to provide metal in amount of 15-30 wppm.

5. A method as claimed in any preceding Claim, wherein oil-miscible catalyst is present in amount sufficient to provide metal in amount of 15 wppm.

6. A method as claimed in anyone of Claims 1 to 3, wherein oil-miscible catalyst is present in amount sufficient to provide metal in amount of 30-60 wppm.

7. A method as claimed in anyone of Claims 1 to 3, wherein oil-miscible catalyst is present in amount sufficient to provide metal in an amount of 45 wppm whereby total power required to maintain the ebullated bed at desired reactor temperature is decreased.

8. A method as claimed in anyone of Claims 1 to 3, wherein oil-miscible catalyst is present in amount sufficient to provide metal in an amount of 60 wppm whereby conversion of components boiling above 538°C (1000°F) to components boiling below 538°C (1000°F) is increased.

9. A method as claimed in any preceding Claim, wherein more than one oil-miscible catalyst is present.

10. A method as claimed in any preceding Claim, wherein said oil-miscible catalyst comprises molybdenum naphthenate and cobalt naphthenate.

11. A method as claimed in any preceding Claims, wherein oil-miscible catalyst is cobalt naphthenate, molybdenum hexacarbonyl, molybdenum naphthenate, molybdenum octoate or molybdenum hexanoate.

## Patentansprüche

1. Ein Verfahren zur katalytischen Hydroconversion eines Chargen-Kohlenwasserstofföls, das 50-98 Gewichtsprozent Komponenten enthält, die oberhalb 538°C (1.000°F) sieden, in einem wallenden Bett, um 30-90 Gewichtsprozent davon in Produkt umzuwandeln, das Komponenten enthält, die unterhalb 538°C (1.000°F) sieden, welches umfaßt,
daß besagtes Chargen-Kohlenwasserstofföl, das 50-98 Gewichtsprozent Komponenten enthält, die oberhalb 538°C (1.000°F) sieden, in einer Umwandlungszone in Kontakt gebracht wird mit (i) einem festen heterogenen Katalysator, der, als eine Hydrotreating-Komponente, ein Metall aus Gruppe IV-B, V-B, VI-B, VII-B oder VIII auf einem Träger enthält, und (ii), als einem ölmischbaren Katalysator, einer Verbindung eines Metalls aus Gruppe IV-B, V-B, VI-B, VII-B oder VIII, wobei besagter ölmischbarer Katalysator in einer Menge vorhanden ist, die ausreicht, um Metall in einer Menge von weniger als 60 wppm, bezogen auf das Chargen-Kohlenwasserstofföl, bereitzustellen;
daß besagtes Chargen-Kohlenwasserstofföl in besagter Umwandlungszone bei Umwandlungsbedingungen in der Gegenwart von Wasserstoff und Mercaptan gehalten wird, bis von 30-90 Gewichtsprozent besagter Komponenten, die oberhalb 538°C (1.000°F) sieden, in Komponenten umgewandelt sind, die unterhalb 538°C (1.000°F) sieden; und
daß besagtes Produkt gewonnen wird.

2. Ein Verfahren nach Anspruch 1, wobei der ölmischbare Katalysator im Chargen-Kohlenwasserstoff in einer Menge von wenigstens 0,01 g/100 g löslich ist.

3. Ein Verfahren nach einem vorangehenden Anspruch, wobei der ölmischbare Katalysator in einer Menge vorliegt, die ausreicht, um Metall in einer Menge von 15-60 wppm bereitzustellen.

4. Ein Verfahren nach einem vorangehenden Anspruch, wobei der ölmischbare Katalysator in einer Menge vorliegt, die ausreicht, um Metall in einer Menge von 15-30 wppm bereitzustellen.

5. Ein Verfahren nach einem vorangehenden Anspruch, wobei der Ölmischbare Katalysator in einer Menge vorliegt, die ausreicht, um Metall in einer Menge von 15 wppm bereitzustellen.

6. Ein Verfahren nach einem der Ansprüche 1 bis 3, wobei der ölmischbare Katalysator in einer Menge vorliegt, die ausreicht, um Metall in einer Menge von 30-60 wppm bereitzustellen.

7. Ein Verfahren nach einem der Ansprüche 1 bis 3, wobei der ölmischbare Katalysator in einer Menge vorliegt, die ausreicht, um Metall in einer Menge von 45 wppm bereitzustellen, wodurch die Gesamtenergie, die erforderlich ist, um das wallende Bett bei gewünschter Reaktortemperatur zu halten, gesenkt wird.

8. Ein Verfahren nach einem der Ansprüche 1 bis 3, wobei der ölmischbare Katalysator in einer Menge vorliegt, die ausreicht, um Metall in einer Menge von 60 wppm bereitzustellen, wodurch die Umwandlung von Komponenten, die oberhalb 538°C (1.000°F) sieden, in Komponenten, die unterhalb 538°C (1.000°F) sieden, erhöht wird.

9. Ein Verfahren nach einem vorangehenden Anspruch, wobei mehr als ein ölmischbarer Katalysator vorliegt.

10. Ein Verfahren nach einem vorangehenden Anspruch, wobei besagter ölmischbarer Katalysator Molybdännaphthenat und Cobaltnaphthenat umfaßt.

11. Ein Verfahren nach einem vorangehenden Anspruch, wobei der ölmischbare Katalysator Cobaltnaphthenat, Molybdänhexacarbonyl, Molybdännaphthenat, Molybdänoctoat oder Molybdänhexanoat ist.

## Revendications

1. Procédé d'hydroconversion par voie catalytique d'une huile d'hydrocarbure de charge contenant 50-98% en poids de composés bouillant au-dessus de 538°C (1000°F) dans un lit bouillonnant pour convertir 30-90% en poids de ceux-ci en un produit contenant des composés bouillant au-dessous de 538°C (1000°F), qui comprend les étapes consistant à
amener, dans une zone de conversion, ladite huile d'hydrocarbure de charge contenant 50-98% en poids de composés bouillant au-dessus de 538°C (1000°F) au contact de (i) un catalyseur hétérogène solide contenant, à titre de constituant d'hydrotraitement, un métal du Groupe IV-B, V-B, VI-B, VII-B ou VIII sur un support et (ii), à titre de catalyseur miscible à l'huile, un composé d'un métal du groupe IV-B, V-B, VI-B, VII-B ou VIII, ledit catalyseur miscible à l'huile étant présent en une quantité suffisante pour fournir le métal en une quantité inférieure à 60 ppm en poids, sur la base de l'huile d'hydrocarbure de charge ;
maintenir ladite huile d'hydrocarbure de charge dans ladite zone de conversion dans des conditions de conversion en présence d'hydrogène et d'un mercaptan jusqu'à ce que 30-90% en poids desdits composés bouillant au-dessus de 538°C (1000°F) aient été convertis en composés bouillant au-dessous de 538°C (1000°F) ; et
récupérer ledit produit.

2. Procédé selon la revendication 1, dans lequel le catalyseur miscible à l'huile est soluble dans l'hydrocarbure de charge en une quantité d'au moins 0,01 g/100g,

3. Procédé selon l'une quelconque des revendications précèdentes, dans lequel le catalyseur miscible à l'huile est présent en une quantité suffisante pour fournir le métal en une quantité de 15-60 ppm en poids,

4. Procédé selon l'une quelconque des revendications précèdentes, dans lequel le catalyseur miscible à l'huile est présent en une quantité suffisante pour fournir le métal en une quantité de 15-30 ppm en poids.

5. Procédé selon l'une quelconque des revendications précèdentes, dans lequel le catalyseur miscible à l'huile est présent en une quantité suffisante pour fournir le métal en une quantité de 15 ppm en poids.

6. Procédé selon l'une quelconque des revendications 1 à 3, dans lequel le catalyseur miscible à l'huile est présent en une quantité suffisante pour fournir le métal en une quantité de 30-60 ppm en poids.

7. Procédé selon l'une quelconque des revendications 1 à 3, dans lequel le catalyseur miscible à l'huile est présent en une quantité suffisante pour fournir le métal en une quantité de 45 ppm en poids, grâce à quoi l'énergie totale requise pour maintenir le lit bouillonnant à la température de réacteur souhaitée est réduite.

8. Procédé selon l'une quelconque des revendications 1 à 3, dans lequel le catalyseur miscible à l'huile est présent en une quantité suffisante pour fournir le métal en une quantité de 60 ppm en poids, grâce à quoi le taux de conversion des composés bouillant au-dessus de 538°C (1000°F) en composés bouillant au-dessous de 538°C (1000°F) est augmenté.

9. Procédé selon l'une quelconque des revendications précèdentes, dans lequel plus d'un catalyseur miscible à l'huile est présent.

10. Procédé selon l'une quelconque des revendications précédentes, dans lequel ledit catalyseur miscible à l'huile comprend du naphténate de molybdène et du naphténate de cobalt.

11. Procédé selon l'une quelconque des revendications précédentes, dans lequel le catalyseur miscible à l'huile est un naphténate de cobalt, un molybdène hexacarbonyle, un naphténate de molybdène, un octoate de molybdène ou un hexanoate de molybdène.
